# EUROPEAN PATENT APPLICATION

(11) **EP 2 345 546 A2**
(43) Date of publication of application: **20.07.2011**
(21) Application number: 11150776.0
(22) Date of filing: 12.01.2011
(51) Int. Cl.: B60B 27/00

(54) **Ratchet hub device**

(30) Priority: 14.01.2010 TW 099200755
(71) Applicant: Han Vin Ent. Co., Ltd., Taichung City 436 (TW)
(72) Inventor: Chung Jia, Lee, Taichung City 436 Taipei (TW)
(74) Representative: Lang, Christian

(57) **Abstract**

A ratchet hub device, which can be quickly meshed to drive a bicycle, includes a hub shell (50), a ratchet cylinder (401), and an axle. There are plural tooth sockets (52) and two groups of receiving notches between the hub shell (10) and the ratchet cylinder (20). The receiving notches (22) of each of the two groups are arranged with an equal interval between each other. Each of the receiving notches of the one group is arranged next to one of the receiving notches of the other group. Two groups of receiving notches receive ratchet members therein and engage with the tooth sockets by turns. Thereby, when a rider re-pedals a bicycle, one group of the ratchet members (26) engage with the near tooth sockets so as to quickly engage with the hub shell (10) and drive the hub shell to rotate.

## Description

### BACKGROUND OF THE INVENTION

### Field of the Invention

The present invention relates to a ratchet device for a transmission hub of a bicycle.

### Description of the Prior Art

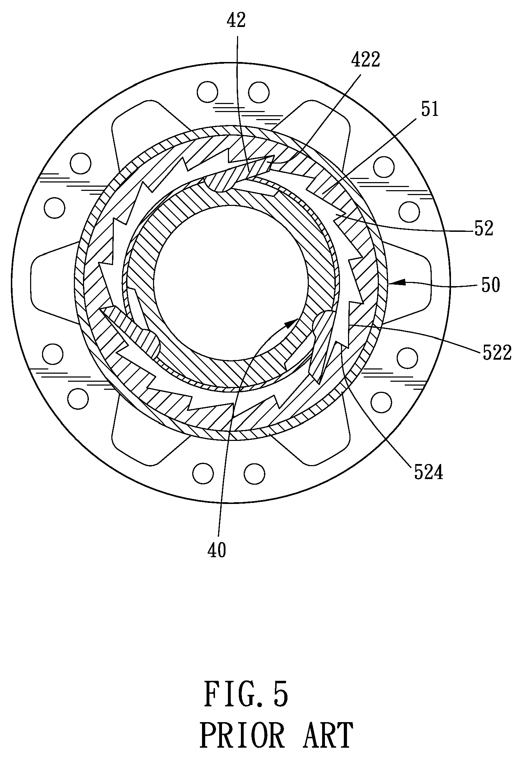

A conventional ratchet hub device for a bicycle, as shown in FIG. 5, includes a hub shell (50) and a ratchet cylinder (40) which is engaged with the hub shell (50). The hub shell (50) has a recess (51). The recess (51) has twenty-five tooth sockets (52). Each of the tooth sockets (52) has a leading edge (522) and an abutting edge (524). The abutting edge (524) is almost vertically connected to the leading edge (522). Three ratchet members (42) are disposed on the ratchet cylinder (40) with an equal interval between each other. Each of the ratchet members (42) comprises a pawl (422) to abut against the abutting edge (524) so as to drive the hub shell (50).

Said ratchet hub device for a bicycle has the following disadvantages in use:
First, when a rider re-pedals to rotate the ratchet hub device, the ratchet member (42) has to move a certain distance to make the pawl (422) abut against the abutting edge (524). The ratchet member (42) fails to quickly engage with the hub shell (50), so that ratchet hub device cannot be driven to rotate rapidly. Therefore, the rider easily has an unsmooth feeling when riding the bicycle.
Second, each of the ratchet members (42) has only one pawl (422). The recess (51) needs to be formed with the deeper tooth sockets (52), so that the tooth sockets (52) can make the pawl (422) firmly abut against the abutting edge (524). However, the deeper tooth sockets (52) require a bigger size of the hub shell (50).

### SUMMARY OF THE INVENTION

A conventional ratchet hub device fails to quickly engage with a ratchet cylinder. Further, a structure of the conventional ratchet hub device is not small enough. Therefore, the main object of the present invention is to provide a ratchet hub device which can solve above-mentioned problems of the conventional ratchet hub device. The ratchet hub device of the present invention includes two groups of ratchet members. And there is a half tooth pitch difference between two groups of the ratchet members. Thereby, the ratchet members can quickly engages with tooth sockets of a hub shell, so that a rider can rapidly drive the hub shell to rotate and has a more smooth feeling when riding. The present invention increases a quantity of the tooth sockets so that the depth of each tooth socket can be decreased. Consequently, the hub shell can be made in a smaller structure.

To achieve the above objects, a hub shell device of the present invention comprises an axle, a hub shell, and a ratchet cylinder. The hub shell, which is rotatably disposed on the axle, is formed with a recess on one end. Plural tooth sockets are formed on an inner peripheral surface of the recess, and the tooth sockets are arranged with an equal interval between each other. The ratchet cylinder is rotatably disposed on the axle. One end of the ratchet cylinder, which is toward the hub shell, is formed with a wheel like member. The wheel like member is adapted to be received in the recess. An outer peripheral surface of the wheel like member is disposed with plural receiving notches. The receiving notches are divided into two groups. The receiving notches of each of the two groups are arranged with an equal interval between each other, and each of the receiving notches of the one group is arranged next to one of the receiving notches of the other group. An interval between the two adjacent receiving notches is non-integer multiple of a tooth pitch. Each of the receiving notches receives a ratchet member which abuts against the tooth sockets by an elastic force.

Preferably, the recess comprises more than sixty said tooth sockets, and each of the ratchet members has more than two pawls to engage with the tooth sockets. More specifically, there are totally six ratchet members, and each of the ratchet members has three pawls. Each of the receiving notches has a ratchet member notch and an elastic piece notch. An opening of the ratchet member notch faces toward an opening of the elastic piece notch. The ratchet member notch receives said ratchet member, and the elastic piece notch receives an elastic piece which elastically abuts against said ratchet member.

Thereby, the ratchet hub device of the present invention has the following advantages:
First, the ratchet hub device has the ratchet members which are divided as a first group and a second group. When a rider pedals a bicycle, the device makes the one group of the ratchet members, which is near the recess, engage with the recess of the hub shell so as to quickly drive the hub shell to rotate and greatly decrease the time from pedaling the bicycle to driving the hub to rotate.
Second, the ratchet member has more than two pawls, so that a size of the tooth sockets on the recess can be decreased. Consequently, a size of the hub shell can further be decrease as well.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

FIG. 1 is a stereogram showing a ratchet hub device in accordance with a preferred embodiment of the present invention;
FIG. 2 is a breakdown drawing showing a ratchet cylinder of a ratchet hub device in accordance with a preferred embodiment of the present invention;
FIG. 3 is a schematic drawing showing a rotation movement of a ratchet cylinder of a ratchet hub device in accordance with a preferred embodiment of the present invention;
FIG. 4 is an enlarged drawing showing a part of a ratchet cylinder of a ratchet hub device in accordance with a preferred embodiment of the present invention;
FIG. 5 is a plan drawing showing a conventional ratchet hub device.

### DETAILED DESCRIPTION OF THE PREFERRED EMBODIMENTS

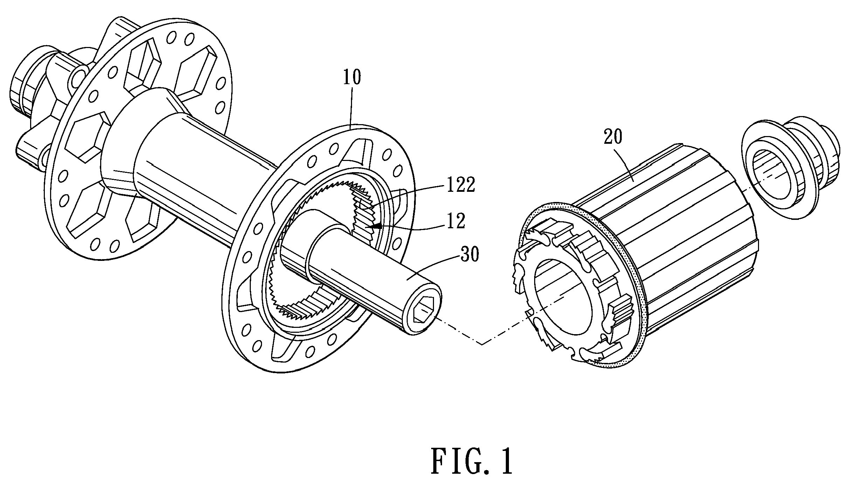

Please refer to FIG. 1 to FIG. 4. A ratchet hub device of the present invention which is used for a bicycle includes a hub shell (10), a ratchet cylinder (20), and an axle (30). The hub shell (10) is rotatably disposed on the axle (30), and the ratchet cylinder (20), which is rotatably disposed on the axle (30), is combined with the shell hub (10).

One end of the hub shell (10) is concavely formed with a recess (12). More than sixty tooth sockets (122) are formed on an inner peripheral surface of the recess (12). The tooth sockets (122) are arranged with an equal interval between each other. Each of the tooth sockets (122) comprises a leading edge (124) and an abutting edge (126), and the interval between two adjacent tooth sockets (122) defines a tooth pitch.

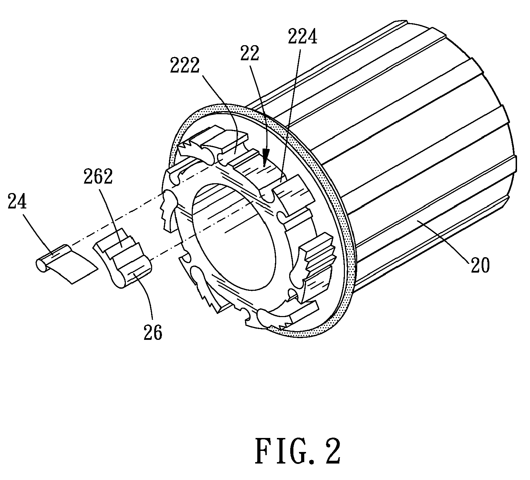

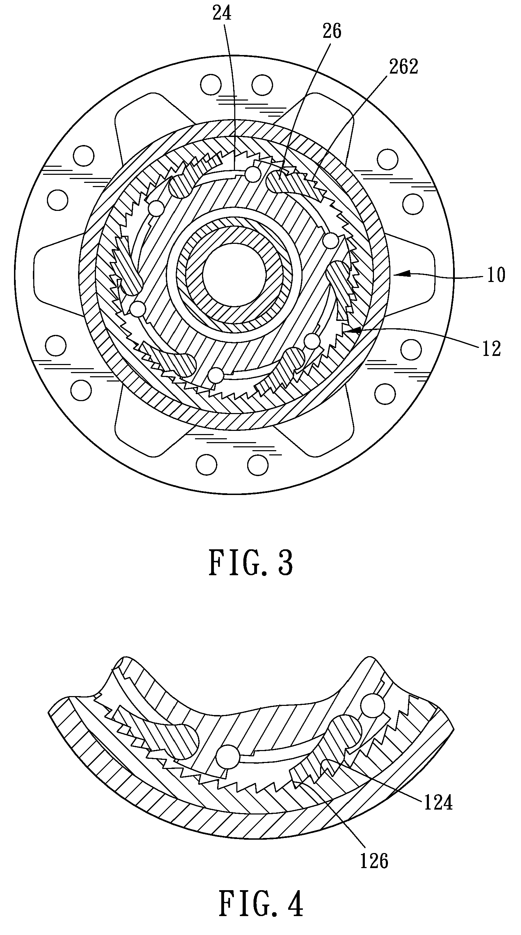

As shown in FIG. 2 and FIG. 3, one end of the ratchet cylinder (20), which is toward the hub shell (10), is formed with a wheel like member. The wheel like member is adapted to be received in the recess (12). An outer peripheral surface of the wheel like member is disposed with plural receiving notches (22). The receiving notches (22) are divided into two groups. The receiving notches (22) of each group are arranged with an equal interval between each other, and each of the receiving notches (22) of the one group is arranged next to one of the receiving notches (22) of the other group. An interval between the two adjacent receiving notches (22) is non-integer multiple of the tooth pitch. Preferably, the interval is a single multiple of a half said tooth pitch. Each of the receiving notches (22) comprises an elastic piece notch (222) and a ratchet member notch (224). An opening of the ratchet member notch (224) faces toward an opening of the elastic piece notch (222). The ratchet member notch (224) receives a ratchet member (26), and the elastic piece notch (222) receives an elastic piece (24). The ratchet member (26) has more than two pawls (262) which can engage with the tooth sockets (122) of the recess (12), and the elastic piece (24) abuts against the ratchet member (26) so as to provide the ratchet member (26) an elastic force to abut the tooth sockets (122). With the interval arrangement of two groups of the ratchet members, the present invention makes the one group of the ratchet members (26), which is near the abutting edge (126) of the recess (12), engage with the abutting edge (126) when a rider re-pedals, so that the ratchet cylinder (20) can quickly drive the hub shell (10) to rotate.

In other possible embodiments of the present invention, the tooth sockets (122) can be formed on the outer peripheral surface of the wheel like member, and the receiving notches (22) can be formed on the inner peripheral surface of the recess (12).

As shown in FIG. 3 and FIG. 4, the ratchet cylinder (20) comprises six receiving notches (22) which are divided into two groups. And each of the ratchet members (26) comprises three pawls (262).

Please refer to FIG. 3 and FIG. 4. Each of the receiving notches (22) of the one group is arranged next to one of the receiving notches (22) of the other group. Thereby, when a rider re-pedals, the ratchet hub device makes the one group of the ratchet members (26), which is near the abutting edge (126) of the recess (12), engage with the abutting edge (126). Therefore, the rider can smoothly re-pedal a bicycle.

Each group of the ratchet members (26) is arranged with an equal interval between each other so as to evenly and firmly engage with the tooth sockets (122) of the recess (12). And each of the ratchet members (26) has more than two pawls (262), so that a depth of the tooth sockets (122) can be decreased and a size of the hub shell (10) can also be decreased.

## Claims

1. A ratchet hub device, comprising:
an axle (30);
a hub shell (10), being rotatably disposed on the axle (30), one end of the hub shell (10) being formed with a recess (12), the recess (12) having an inner peripheral surface;
a ratchet cylinder (20), being rotatably disposed on the axle (30), one end of the ratchet cylinder (20), which is toward the hub shell (10), being formed with a wheel like member, the wheel like member being adapted to be received in the recess (12), the wheel like member having an outer peripheral surface;
wherein one of the inner peripheral surface of the recess (12) and the outer peripheral surface of the wheel like member is formed with plural tooth sockets (122), the tooth sockets (122) are arranged with an equal interval between each other, the interval between two adjacent tooth sockets defining a tooth pitch;
wherein another one of the inner peripheral surface of the recess (12) and the outer peripheral surface of the wheel like member is formed with plural receiving notches (22), the receiving notches (22) are divided into two groups, the receiving notches (22) of each of the two groups are arranged with an equal interval between each other, each of the receiving notches (22) of the one group is arranged next to one of the receiving notches of the other group, an interval between the two adjacent receiving notches (22) is non-integer multiple of the tooth pitch, and each of the receiving notches (22) receives a ratchet member (26) which abuts against the tooth sockets (122) by an elastic force.

2. The ratchet hub device of claim 1, wherein the tooth sockets (122) are located on the inner peripheral surface of the recess (12), and the receiving notches (22) are located on the outer peripheral surface of the wheel like member.

3. The ratchet hub device of claim 1, wherein the recess (12) has more than sixty said tooth sockets (122), and the ratchet member (26) has more than two pawls (262) to engage with the tooth sockets (122).

4. The ratchet hub device of claim 3, wherein the ratchet member (26) has three said pawls (262).

5. The ratchet hub device of claim 2, wherein the recess (12) has more than sixty said tooth sockets (122), and the ratchet member (26) has more than two pawls (262) to engage with the tooth sockets (122).

6. The ratchet hub device of claim 5, wherein the ratchet member (26) has three said pawls (262).

7. The ratchet hub device of claim 1, wherein there are totally six ratchet members (26).

8. The ratchet hub device of claim 7, wherein each of the receiving notches (22) has a ratchet member notch (224) and an elastic piece notch (222), an opening of the ratchet member notch (224) faces toward an opening of the elastic piece notch (222), the ratchet member notch (224) receives said ratchet member (26), and the elastic piece notch (222) receives an elastic piece (24) which elastically abuts against said ratchet member (26).

9. The ratchet hub device of claim 1, wherein each of the receiving notches (22) has a ratchet member notch (224) and an elastic piece notch (222), an opening of the ratchet member notch (224) faces toward an opening of the elastic piece notch (222), the ratchet member notch (224) receives said ratchet member (26), and the elastic piece notch (222) receives an elastic piece (24) which elastically abuts against said ratchet member (26).
